(19) Europäisches Patentamt / European Patent Office / Office européen des brevets

(11) **EP 3 219 039 B1**

(12) **EUROPEAN PATENT SPECIFICATION**

(45) Date of publication and mention
of the grant of the patent:
**05.05.2021 Bulletin 2021/18**

(21) Application number: **15794868.8**

(22) Date of filing: **06.11.2015**

(51) Int Cl.:
***H04L 5/00*** (2006.01)

(86) International application number:
**PCT/EP2015/075932**

(87) International publication number:
**WO 2016/075046 (19.05.2016 Gazette 2016/20)**

(54) **REDUCING INTERFERENCE CAUSED BY UPLINK CARRIER AGGREGATION**

REDUZIERUNG VON INTERFERENZ DURCH UPLINK-TRÄGERAGGREGATION

RÉDUCTION D'INTERFÉRENCE PROVOQUÉE PAR UNE AGRÉGATION DE PORTEUSE DE LIAISON MONTANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2014 US 201462077495 P**

(43) Date of publication of application:
**20.09.2017 Bulletin 2017/38**

(73) Proprietor: **Telefonaktiebolaget LM Ericsson (publ)**
**164 83 Stockholm (SE)**

(72) Inventors:
• **BEHRAVAN, Ali**
  **SE-113 36 Stockholm (SE)**

• **BERGLJUNG, Christian**
  **SE-223 53 Lund (SE)**
• **KAZMI, Muhammad**
  **SE-167 39 Bromma (SE)**
• **TEJEDOR, Erika**
  **SE-112 33 Stockholm (SE)**
• **RAHMAN, Imadur**
  **SE-191 46 Sollentuna (SE)**

(74) Representative: **Zacco Sweden AB**
**Valhallavägen 117**
**Box 5581**
**114 85 Stockholm (SE)**

(56) References cited:
**EP-A1- 2 693 815        US-A1- 2011 051 643**
**US-A1- 2013 194 938     US-A1- 2013 250 871**

**Description**

TECHNICAL FIELD

The present disclosure is directed to communications and, more particularly, to wireless communication methods, networks, and network nodes.

BACKGROUND

To enhance peak data rates within a wireless communication system, multi-carrier or carrier aggregation solutions have been proposed. For example, it is possible to use multiple 5MHz carriers in a high speed packet access (HSPA) network to enhance the peak data rate within the HSPA network. Similarly, in LTE, multiple 20 MHz carriers, or even smaller carriers (e.g. 5 MHz), can be aggregated on the downlink (DL) and/or on the uplink (UL). Each carrier in multi-carrier or carrier aggregation system is generally termed as a component carrier (CC), or sometimes is also referred to a cell. That is, a component carrier (CC) refers to an individual carrier in a multi-carrier system.

The term carrier aggregation (CA) is also sometimes referred to as a "multi-carrier system", "multi-cell operation", "multi-carrier operation", or as "multi-carrier" transmission and/or reception. Carrier aggregation may be used for transmission of control signals and data in the uplink and downlink directions.

One of the CCs used for carrier aggregation may be designated as the primary component carrier (PCC), primary carrier, or anchor carrier. The remaining carriers may be called secondary component carriers (SCC), secondary carriers, or supplementary carriers. Generally, the primary CC carries essential UE-specific signaling. The primary CC exists in both uplink and downlink directions. The network may assign different primary carriers to different UEs operating in the same sector or cell.

Note that a "carrier" may refer to a single tone signal or a wide band signal, and that the term "carrier frequency" refers to the center frequency in a wide band signal.

In carrier aggregation, the cell where the uplink (UL) connection to the base station is allocated for a particular UE is referred to as the PCell (primary cell) for that UE, while the other aggregated cell is referred to as the SCell (secondary cell). PCell and SCell designations are UE-specific.

In Rel-8 of the 3GPP LTE specification, only one component carrier is used for communication between an eNodeB (eNB) and a user equipment (UE). Carrier Aggregation was introduced in the Rel-10 version of the 3GPP LTE specification. As specified in the LTE specification, the aggregation of carriers can be done either between carriers in different frequency bands (inter-band CA) or in the same band (intra-band CA).

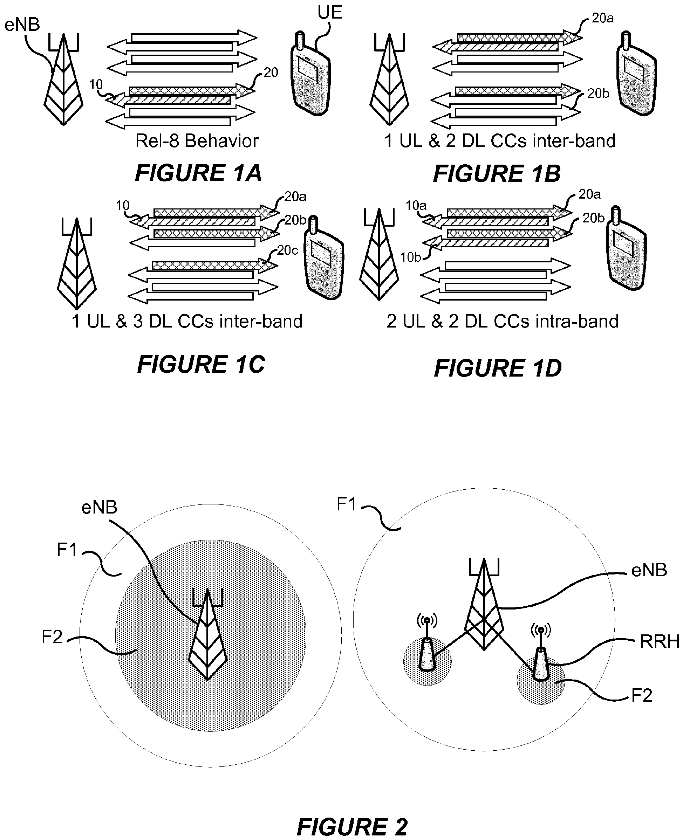

Figure 1A illustrates an eNodeB (eNB) that is capable of transmitting/receiving on four (4) different component carriers at the same time. These component carriers are operated either in different frequency bands, or they can be operated in the same frequency band. The system of Figure 1A operates according to the Rel-8 standard, that is, without using carrier aggregation. A single CC 10 in one freque cy band is used for the uplink (UL) and a single CC 20 in the same frequency band is used for the downlink (DL). **Figures 1B to 1D** illustrate different CA scenarios.

**CA cases based on different number of CCs in DL and/or UL**

**Figure 1B** illustrates a scenario utilizing CA with 2 DL CCs 20a, 20b and 1 UL CC 10. Compared to **Figure 1A,** two of the cells are activated for one UE, which is the initial version of DL carrier aggregation. In this case, the UE is configured to receive in two DL carriers 20a, 20b simultaneously while still using a single UL carrier 10. In the case of inter-band CA, the UL allocation may be in either band depending on the capability of the UE.

**Figure 1C** illustrates a scenario utilizing CA with 3 DL CCs 20a-c and 1 or 2 UL CCs 10. Similar to the 2 DL CC case of **Figure 1B,** for inter-band CA, the UL can be allocated in either band, depending on capability of the UE.

**Figure 1D** illustrates a scenario involving CA with 2 UL CCS 10a, 10b and 2 or 3 DL CCs 20a, 20b. That is, **Figure 1D** illustrates the case when UL carrier aggregation is also enabled for the terminal. In this case, only 2UL and 2DL carrier aggregation is shown. For UL carrier aggregation, PCell and SCell definitions are still UE-specific.

**Carrier aggregation deployment scenarios**

**Figure 2** shows two examples of CA deployment scenarios. The left hand side of **Figure 2** illustrates cells F1 and F2 that are co-located and overlaid. The F2 cell has a smaller coverage area due, for example, to larger path loss. While the F1 cell has a larger coverage area, the F2 cell may be used to improve throughput. Mobility is performed based on F1 coverage. This scenario may occur when the F1 cell and the F2 cell operate on different frequency bands, e.g., F1 = {800 MHz, 2 GHz} and F2 = {3.5 GHz}, etc. Carrier aggregation is possible between overlaid F1 and F2 cells.

The figure on the right hand side of **Figure 2** shows a different kind of deployment. In this case, the F1 cell provides macro coverage and the F2 cell includes Remote Radio Heads (RRHs) that are used to improve throughput at hot spots. Mobility is performed based on F1 cell coverage. In this scenario, the F1 and F2 cells may also operate on different bands, e.g., F1 = {800 MHz, 2 GHz} and F2 = {3.5 GHz}, etc. In this scenario, CCs in the F2 RRH cells can be aggregated with CCs in the underlying F1 macro cells.

## Dual Connectivity

In dual connectivity (DC), the UE can be served by two network nodes that may be referred to as main eNB (MeNB) and secondary eNB (SeNB) nodes, or primary and secondary nodes, or anchor and booster nodes. The UE is configured with a CC from both the MeNB and the SeNB. The PCell from the MeNB and the SeNB are referred to as PCell and PSCell respectively. The PCell and PSCell may typically communicate with the UE independently.

The UE may also be configured with one or more SCCs from each of the MeNB and SeNB. The corresponding secondary serving cells served by the MeNB and the SeNB are referred to as SCells. In a Dual Connectivity application, the UE typically has separate TX/RX connections for each of the connections with the MeNB and the SeNB. This allows the MeNB and SeNB to independently configure the UE with one or more procedures e.g. radio link monitoring (RLM), DRX cycle etc., on their PCell and PSCell, respectively.

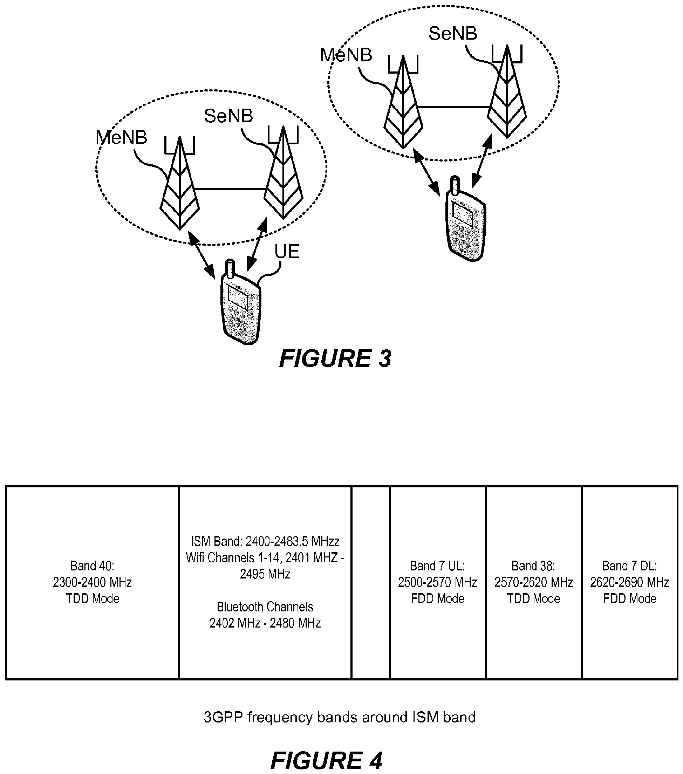

A dual connectivity scenario is illustrated, for example, in **Figure 3.** In particular, Figure 3 illustrates a UE that communicates simultaneously with an MeNB and a SeNB.

Dual connectivity (DC) is a mode of operation of a UE in the RRC_CONNECTED state, where the UE is configured with a Main Cell Group (MCG) and a Secondary Cell Group (SCG). A Cell Group (CG) is a group of serving cells associated with either the MeNB or the SeNB. A Main Cell Group (MCG) is a group of serving cells associated with the MeNB. The MCG includes the PCell and optionally one or more SCells. A Secondary Cell Group (SCG) is a group of serving cells associated with the SeNB. The SCG includes the PSCell (Primary SCell) and optionally one or more SCells.

## Intermodulation Products

Intermodulation distortion products (IMD) are a type of spurious emission that can be caused by nonlinearities in a radio transmitter. Intermodulation products may also be referred to as transmitter intermodulation products, and may be denoted as IMD, IM or IMP. IMD can be expressed in terms of absolute power (e.g. expressed in dBm) of the generated IMD, or relative power (e.g. expressed in dB) of generated IMD with respect to a reference value (e.g. power generated by the wanted signal).

When multiple signals are transmitted through the same device, inter-modulation products may be created due to nonlinearities in the transmitter. In particular, the RF front end of a transmitter may have some nonlinearity. A simple example of such a case is a signal that consists of two single tones $x=cos(\omega_1 t)+cos(\omega_2 t)$ going through a nonlinearity with the profile $y=\alpha_1 x+\alpha_3 x^3$. The output signal will contain not only components at $\omega_1$, $\omega_2$, $3\omega_1$, $3\omega_3$, but also intermodulation products (IMD) at $3\omega_1$-$2\omega_2$, $3\omega_2$-$2\omega_1$, etc. As it can be seen, the intermodulation products may be present either inside the channel of the desired signal, or they may leak to other channels.

When two signals including different frequency components go through the RF front-end nonlinearity, numerous inter-modulation products are created, and part of them may end up in other carriers. This may occur when carrier aggregation is used where the two carriers are being transmitted by the same RF front-end. For example, in a UE that supports Band 3 (1710-1785/ 1805-1880MHz) and Band 20 (832-862/791-821MHz), dual uplink CA (2DL and 2UL) may create IMD products in Band 42 (3400-3600MHz) depending on the UL frequencies being transmitted.

A large number of inter-band CA configurations with 2UL CCs may potentially impact non-cellular wireless communications systems, referred to herein as external wireless systems (EWS). An example of an EWS that may be affected by IMD generated due to Carrier Aggregation is a Global Navigation Satellite System (GNSS), such as the Global Positioning System (GPS). In fact, of the 24 2UL inter-band CA band combinations currently being specified in 3GPP RAN4, half of them may generate IM products up to 5th order that bleed into GNSS receive bands. At the GNSS receiver, IMD generated by the UE may impair the GNSS signal quality such that the IMD may block the GNSS receiver or otherwise induce large errors in the received GNSS signal. This may, for example, degrade location and speed values calculated based on the GNSS signal.

Some approaches described above could be pursued, but are not necessarily approaches that have been previously conceived or pursued. Therefore, unless otherwise indicated herein, the approaches described above are not prior art to the claims in this application and are not admitted to be prior art by inclusion above. Further, US 2013/250871 describes mechanisms for controlling communications conducted in multiple frequency bands so as to decrease an interference level between the communications.

SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. A method of operating a user equipment unit, UE, according to some embodiments includes determining (102) that intermodulation distortion, IMD, generated by the UE due to the transmission of at least two uplink, UL, component carriers, CCs, using a first UL transmission configuration is causing interference to an external wireless system, EWS, obtaining (104) a second UL transmission configuration that contains at least one transmission parameter with a lower value than a corresponding transmission parameter in the first UL transmission configuration, and transmitting (106) at least one of the UL CCs using the second UL transmission configuration. The EWS may be operated by the UE. By implementing such a method, interference caused to an external wireless system by intermodulation distortion generated as a result of performing carrier aggregation can be reduced.

Performing carrier aggregation in this manner may reduce the impact of intermodulation components generated as a result of carrier aggregation on the operation of an external wireless system.

The method may further include estimating (110) the intermodulation products generated by the transmission of the two UL CCs.

The method may further include changing a frequency of operation of the EWS in response to determining (102) that the intermodulation products generated by the UE due to the transmission of the at least two UL CCs using the first UL transmission configuration is causing interference to the EWS.

The parameter may include a number of UL physical channels or physical signals, UL bit rate, modulation order, and/or MCS.

The method may further include informing (120) a network node of the use of the second UL transmission configuration.

The method may further include informing a network node of the length of time that the second UL transmission configuration will be used.

The method may further include changing a position of resource blocks, RBs, and/or resource elements, REs, in the CCs to reduce interference due to intermodulation products at the EWS in response to determining (102) that the intermodulation products generated by the UE due to the transmission of the at least two UL CCs using the first UL transmission configuration is causing interference to the EWS.

The method may further include receiving the second UL transmission configuration from a network node.

The method may further include limiting a range of power headroom on the UL CCs in response to determining (102) that the intermodulation products generated by the UE due to the transmission of the at least two UL CCs using the first UL transmission configuration is causing interference to the EWS.

The method may further include requesting a network node to limit an RB allocation of at least one UL CC in response to determining (102) that the intermodulation products generated by the UE due to the transmission of the at least two UL CCs using the first UL transmission configuration is causing interference to the EWS.

The method may further include reducing a number of transport blocks per transport channel and/or reducing a transport block size per transport block in response to determining (102) that the intermodulation products generated by the UE due to the transmission of the at least two UL CCs using the first UL transmission configuration is causing interference to the EWS.

The method may further include reducing a coding rate and/or a modulation level of UL transmissions by the UE in response to determining (102) that the intermodulation products generated by the UE due to the transmission of the at least two UL CCs using the first UL transmission configuration is causing interference to the EWS.

The method may further include deactivating or deconfiguring a secondary cell (SCell) associated with UL transmission in response to determining (102) that the intermodulation products generated by the UE due to the transmission of the at least two UL CCs using the first UL transmission configuration is causing interference to the EWS.

The method may further include adapting a measurement procedure of the UE for measuring an uplink signal parameter in response to determining (102) that the intermodulation products generated by the UE due to the transmission of the at least two UL CCs using the first UL transmission configuration is causing interference to the EWS.

The uplink signal parameter may include an SNR, SINR, timing advance (TA), and/or OTDOA measurement.

A method of operating a network node according to further embodiments includes determining (302) that a UE served by the network node operates an external wireless system, EWS, determining (304) that intermodulation products generated by the UE due to the transmission of at least two uplink, UL, component carriers, CCs, using a first UL transmission configuration may cause interference to the EWS, generating (306) a second UL transmission configuration that contains at least one transmission parameter with a lower value than a corresponding transmission parameter in the first UL transmission configuration, and transmitting (308) the second UL transmission configuration to the UE.

The method may further include allocating reduced UL transmission resources to the UE in response to determining (304) that intermodulation products generated by the UE due to the transmission of at least two UL CCs using the first UL transmission configuration may cause interference to the EWS.

The method may further include allocating to another UE resources freed as a result of allocating reduced UL transmission resources.

The method may further include extending a measurement period for a UL radio network measurement in response to determining (304) that intermodulation products generated by the UE due to the transmission of at least two UL CCs using the first UL transmission configuration may cause interference to the EWS.

Obtaining the second UL transmission configuration may include obtaining the second UL transmission configuration responsive to determining that the intermodulation products generated by the UE is causing interference to the EWS.

Generating the second UL transmission configuration may include generating the second UL transmission configuration responsive to determining that the intermodulation products may cause interference to the EWS.

A user equipment unit (UE) according to some embodiments includes a transceiver (2710) including a transmitter and a receiver configured to transmit and receive wireless communications, and a processor (2702) coupled to the transceiver. The processor is configured to perform operations described above.

A network node according to some embodiments includes a transceiver (2810) including a transmitter and a receiver configured to transmit and receive wireless communications, and a processor (2802) coupled to the transceiver. The processor is configured to perform operations described above.

BRIEF DESCRIPTION OF THE DRAWINGS

The accompanying drawings, which are included to provide a further understanding of the disclosure and are incorporated in and constitute a part of this application, illustrate certain non-limiting embodiment(s) of the inventive concepts. In the drawings:

Figures 1A-1D are schematic diagrams that illustrate carrier aggregation in 3GPP-LTE network.
Figures 2 and 3 are schematic diagrams illustrating dual connectivity in a 3GPP-LTE network.
Figure 4 is a table showing 3GPP frequency bands and unlicensed ISM bands.
Figures 5 to 8 are flowcharts illustrating operations according to some embodiments.
Figure 9 illustrates transmission/reception patterns according to some embodiments.
Figures 10 and 11 illustrate power allocations according to some embodiments.
Figure 12 illustrates transmission/reception patterns according to some embodiments.
Figure 13 illustrates a user equipment node according to some embodiments.
Figure 14 illustrates a radio access network node according to some embodiments.
Figure 15 illustrates functional modules of a user equipment node according to some embodiments.
Figure 16 illustrates functional modules of a radio access network node according to some embodiments.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

Although various embodiments are disclosed herein in the context of being performed by a UE and/or a network node, they are not limited thereto and instead can be performed in any type of electronic communication device or system.

As used herein, the term "network node" refers to any type of radio network node that communicates with a UE and/or with another network node. Examples of network nodes are NodeB, MeNB, SeNB, a network node belonging to MCG or SCG, base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME etc), O&M, OSS, SON, positioning node (e.g. E-SMLC), MDT etc.

The term user equipment (UE) refers to any type of wireless device that communicates with a network node and/or with another UE in a cellular or mobile communication system. Examples of UEs are target device, device to device (D2D) UE, machine type UE or UE capable of machine to machine (M2M) communication, PDA, PAD, Tablet, mobile terminals, smart phone, laptop embedded equipped (LEE), laptop mounted equipment (LME), USB dongles etc.

## In-Device Coexistence

In today's mobile user equipment (UEs), multiple radio transceivers are packaged inside the same device. A UE can be equipped to transmit/receive data on external wireless systems, i.e. non-cellular communication systems. Examples of such external wireless systems (EWS) which can be located on a cellular device or UE are LTE, WiFi, Bluetooth transceivers, Global Navigation Satellite System (GNSS) receiver, sports or medical related short range wireless devices, cordless telephones, etc. Examples of GNSS are GPS, Galileo, COMPASS, GANSS etc. The transmit power of one transmitter in a UE may be much higher than the power level of signals received at another receiver, which can cause interference on the victim radio receiver depending on the proximity of the radio transceivers.

**Figure 4** shows the 3GPP frequency bands near the 2.4GHz ISM bands. WiFi uses frequency band 2400-2495 MHz in the industrial, scientific and medical (ISM) band. This band is divided into 14 channels, where each channel has a bandwidth of 22MHz, and 5 MHz separation from other channel with an exception of channel number 14, where the separation is 12 MHz. Because of the proximity of the channels in the frequency domain, a transmitter using LTE band 40 (2300-2400MHz) will affect a WiFi receiver, and a WiFi transmitter will affect an LTE receiver using LTE Band 40. The LTE Band 7 UL is also adjacent to WiFi (2500-2570MHz), and will affect/be affected by the WiFi receiver.

Bluetooth operates between 2402-2480 MHz, in 79 channels of 1MHz bandwidth each. Therefore, similar to WiFi, there may be interference between LTE Band 40 and Bluetooth operation, as well as interference from LTE Band 7 UL to a Bluetooth receiver. LTE Band 7 UL transmissions may also affect the Bluetooth receiver.

Furthermore, the reception of GNSS in the ISM band (e.g. Indian Regional Navigation Satellite System that operates 2483.5-2500MHz) can be affected by LTE Band 7 UL transmission.

In summary some examples of interference scenarios are:

- LTE Band 40 radio TX causing interference to ISM radio RX
- ISM radio TX causing interference to LTE Band 40 radio RX
- LTE Band 7 radio TX causing interference to ISM radio RX
- LTE Band 7/13/14 radio TX causing interference to GNSS radio RX

Another example of in-device-coexistence happens on UEs supporting LTE Band 13 (777-787/746-756MHz) or Band 14 (788-798/748-768MHz), for which second harmonic products will fall in the GPS band.

Note that the frequency bands and radio technologies discussed above are just examples of different possible scenarios. In general, interference can be caused by any radio technology and in any neighboring or sub harmonic frequency band.

To reduce the effect of interference from an LTE transceiver on other communications systems, some interference avoidance solutions can be used in the UE or by the network. The network controlled solutions include time division multiplexing (TDM) or frequency division multiplexing (FDM) methods in which the network ensures that transmission time/frequency of a radio signal does not coincide with reception time of another radio signal of an external wireless system. The UE side solutions include UE autonomous denial where the UE voluntarily refrains from transmitting in a radio system to avoid interference with the reception on another radio system.

P-MPR was proposed in *R4-145129, TP for 36.860: 2UL inter-band CA impact to GNSS, Qualcomm Inc., RAN4#72* to broaden the scope of P-MPR for reducing the impact on a GNSS receiver. The idea of P-MPR is to transmit at a lower power in the UL when a GNSS receiver is impacted. An alternative solution is to allow the UE to autonomously deactivate the UL SCC altogether.

In-device coexistence (IDC) signaling mechanisms have been defined in LTE Rel-11. The Rel-11 specification describes a TDM solution to avoid in-device interference. IDC signaling can be used to enable a UE to inform a network node of, for example, (a) the need for reduced SCell TX power (e.g. the Pcmax): Some fixed SCell TX power levels can be statically defined, which could depend on the band combination (which reflects the IMD order), (b) the need for RB restrictions; the applicable RB restrictions will depend on IMD order, that is the power of the IMD product falling into EWS receiver, thus it could lead to complicated specifications, i.e. RB restrictions that depends on IMD orders, and/or (c) the need for TX gaps in the SCell UL (e.g. SCell DTX patterns).

These techniques do not preclude deactivation of the UL SCell, but provide a UE and/or a network with more degrees of freedom in handling the EWS protection problem.

## Measurements

Several radio related measurements are used by the UE or the radio network node to establish and maintain a wireless connection, as well as to ensure the quality of a radio link.

When the UE is switched on, the UE has to first detect a cell. Therefore, the UE performs cell identification by which the UE acquires a physical cell identity (PCI) of the cell. The UE may also have to acquire the cell global ID (CGI) of a network node.

In mobility management, the UE reads the system information (SI) of a target cell (e.g. intra-, inter-frequency or inter-RAT cell) upon receiving an explicit request from a serving network node via RRC signaling, e.g. from a radio network controller (RNC) in HSPA or an eNode B in an LTE system. The acquired SI is then reported to the serving cell. The signaling messages are defined in the relevant HSPA and LTE specifications.

In order to acquire the SI, which contains the CGI of the target cell, the UE has to read at least part of the system information (SI) including master information block (MIB) and the relevant system information block (SIB). The terms SI reading/decoding/acquisition, CGI/ECGI reading/decoding/acquisition, CSG SI reading/decoding/acquisition are interchangeably used but have the same or similar meaning.

RSRP and RSRQ are two existing measurements used for radio resource management (RRM) functions, such as for mobility, which include mobility in the RRC connected state as well as in the RRC idle state. The RSRP and RSRQ are also used for other purposes, such as for enhanced cell ID positioning, minimization of drive test, etc. Other examples of UE measurements are UE Rx-Tx time difference measurement and reference signal time difference (RSTD) measurement.

In the RRC connected state, the UE can perform intra-frequency measurements without measurement gaps. However, as a general rule, the UE performs inter-frequency and inter-RAT measurements in measurement gaps, unless it is capable of performing them without gaps. Two periodic measurement gap patterns, both with a measurement gap length of 6 ms, are defined for LTE, namely, measurement gap pattern #0 with repetition period 40 ms and measurement gap pattern #1 with repetition period 80 ms.

The measurements performed by the UE are reported to the network, which may use them for various tasks.

The radio network node (e.g. base station) may also perform signal measurements. Examples of radio network node measurements in LTE are propagation delay between UE and itself, UL SINR, UL SNR, UL signal strength, Received Interference Power (RIP), timing advance (TA), eNode Rx-Tx time difference measurement etc., as well as positioning measurements.

The UE also performs measurements on the serving cell (primary cell, or PCell) in order to monitor the serving cell performance. This is referred to as radio link monitoring (RLM) or RLM related measurements in LTE.

For RLM, the UE monitors the downlink link quality based on a cell-specific reference signal in order to detect the downlink radio link quality of the serving cell.

In order to detect out of sync and in sync conditions, the UE compares the estimated quality with the thresholds Qout and Qin, respectively. The thresholds Qout and Qin are defined as the level at which the downlink radio link cannot be reliably received, and correspond to 10% and 2% block error rate of a hypothetical PDCCH transmission, respectively.

## Reduced UL Transmission Configurations

Some embodiments described herein may reduce the impact of intermodulation distortion on an EWS by causing the UE to apply a reduced UL transmission configuration within a current UL scheduling grant in a predefined manner to reduce the interference to the EWS receiver. In a reduced transmission configuration, one or more of the UL transmission parameters may have a lower value than the value of the same parameter in the original UL CC transmission configuration. For example, the number of transmitted resource blocks (RBs) can be limited in a way such that the IMD do not fall into the spectrum used by the EWS in the UE. In other embodiments, the transmitted power in one (or both) of the aggregated carriers can be reduced. Alternatively, a combination of both adapting physical resources and transmission power can be applied by the UE.

In comparison to autonomous deactivation of a UL SCC, reducing the UL transmission configuration is a preferred solution, since autonomous deactivation reduces the UL CA to single CC UL, thus losing all benefits of UL CA. Moreover, modifying the UL transmission configuration may allow the UE to act more quickly when a problem with EWS reception is detected at the UE.

The reduced UL configuration can be used in multiple CCs, or in one of the CCs. In some embodiments, a UE may autonomously decide to use a reduced configuration based on the detection of IMD impact on an EWS receiver in the UE. For example, if a UE experiences problems with EWS reception due to IMD, then the UE can autonomously deactivate the current SCell UL transmission and notify the eNB that a predefined UL allocation should be made on the PCell/SCell and that the power headroom (PHR) on the SCell has changed (e.g., indicate a negative PHR on the SCell). This can be indicated in the usual buffer/headroom report that is sent when the UE has a grant.

In some embodiments, a reduced configuration can be used based on certain predefined criteria, e.g. when the signal quality at the EWS receiver falls below a predetermined threshold.

In other embodiments, a reduced configuration can be used in response to a network indication. For example, the network may decide that certain UL CA band combinations may cause EWS performance degradation. In response, the network can signal the UE to use a reduced UL configuration.

In some embodiments, modified in-device coexistence signaling can be combined with modification of UL transmission configurations as described herein to address IMD issues in an EWS receiver.

Embodiments described herein may overcome one or more of the potential problems described above with existing approaches by modifying UL CA such that in-device EWS operation due to UL CA is not degraded while the UL CA performance still remains within a certain desired quality (e.g. UL throughput is above a minimum QoS target of the UE).

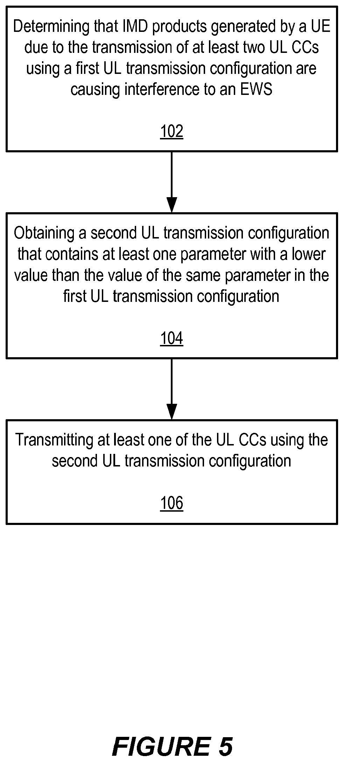

Figure 5 is a flowchart of operations that may be performed by a UE according to some embodiments. In particular, a UE that is configured to utilize carrier aggregation with at least 2 UL component carriers (CCs) and is served by a network node, such as an eNB, may perform the following operations. The UE may determine that intermodulation distortion (IMD) generated by the UE due to the transmission of at least two uplink (UL) component carriers (CCs) using a first UL transmission configuration is causing, or may cause, interference to an external wireless system (EWS) (block 102). The EWS may be operated by the UE. For example, the EWS may be a GPS receiver located in the UE.

If IMD is causing interference to the EWS, the UE may then obtain a second UL transmission configuration that contains at least one transmission parameter with a lower value than a corresponding transmission parameter in the first UL transmission configuration (block 104). The second transmission configuration may be obtained from a network node, or it may be internally generated by the UE.

The UE may then transmit at least one of the UL CCs using the second UL transmission configuration (block 106).

In this context, "transmission parameter" may refer to a number of UL physical channels or physical signals, UL bit rate, modulation order, and/or a modulation and coding scheme (MCS), as discussed in more detail below.

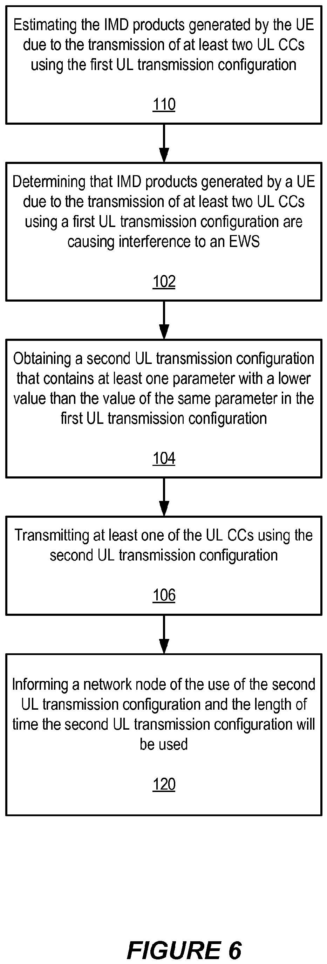

Figure 6 illustrates some additional operations that may be performed by the UE. For example, the UE may determine that IMD generated due to UL carrier aggregation by estimating the IMD generated by the transmission of the two UL CCs (block 110).

Furthermore, when the UE adopts the second transmission configuration, the UE may inform a network node, such as the MeNB, of its use of the second UL transmission configuration (block 120). The UE may also inform the network node of the length of time that the second UL configuration will be used.

In some embodiments, the UE may change a frequency of operation of the EWS in response to determining that the IMD generated by the UE due to the transmission of the at least two UL CCs using the first UL transmission configuration is causing interference to the EWS.

The second transmission configuration may change a position of resource blocks (RBs) and/or resource elements (REs) in the CCs to reduce interference due to IMD at the EWS. In some embodiments, the second transmission configuration may limit a range of power headroom on the UL CCs. In some embodiments, the second transmission configuration may reduce a number of transport blocks per transport channel and/or reducing a transport block size per transport block. In some embodiments, the second transmission configuration may reduce a coding rate and/or a modulation level of UL transmissions by the UE.

In some cases, the UE may request a network node to limit a resource block allocation of at least one UL CC. In still other embodiments, the UE may deactivate or deconfigure a secondary cell (SCell) associated with UL transmission in response to determining that the IMD generated by the UE due to the transmission of the at least two UL CCs using the first UL transmission configuration is causing interference to the EWS.

The UE may also adapt a measurement procedure for measuring an uplink signal parameter, such as a signal to noise ratio (SNR), signal to interference plus noise ratio (SINR), timing advance (TA), and/or observed time difference of arrival (OTDOA) measurement in response to determining that the IMD generated by the UE due to the transmission of the at least two UL CCs using the first UL transmission configuration is causing interference to the EWS.

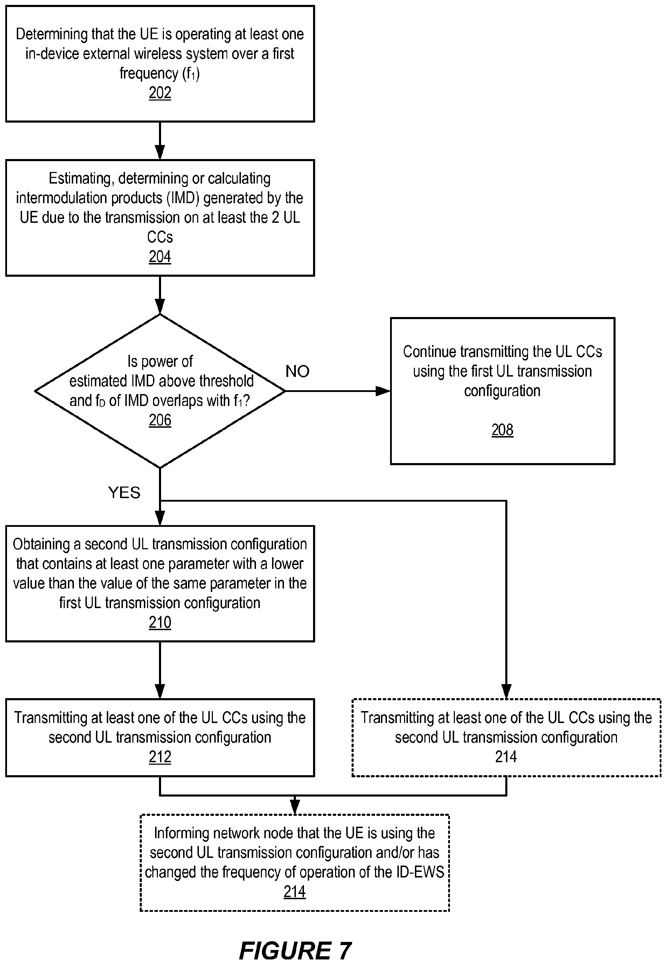

Figure 7 is a flowchart of operations that may be performed by a UE according to further embodiments. Referring to Figure 6, the UE may perform the following actions:

1. Determining that the UE is operating at least one in-device external wireless system (ID-EWS) (e.g. GNSS) over a first frequency ($f_1$) (block 202);

2. Estimating, determining or calculating intermodulation products (IMD) generated by the UE due to the transmission on at least the 2 UL CCs (block 204);

3. Determining if the power of the estimated IMD is above a threshold and a frequency ($F_D$) of the estimated IMD partly or fully overlaps with the first frequency (block 206). If not, the UE may continue transmitting using the first UL transmission configuration (block 208).

If the power of the estimated IMD is above a threshold and the frequency $f_D$ of the IMD overlaps with the frequency $f_1$ of the EWS, the UE may then performing the following:

   a. Obtaining (e.g. pre-defined or configured by a network node or autonomous selection by UE) a second UL transmission configuration for transmitting on at least one of UL CCs, wherein the second UL transmission configuration contains at least one parameter with a value lower than the value of the same parameter in a first UL transmission configuration (block 210), and

b. Transmitting on at least one of the UL CCs using the obtained second UL transmission configuration parameters (block 212).

Alternatively, the UE may change the frequency of operation of the EWS from $f_1$ to a second frequency $f_2$, wherein $f_2$ does not even partly overlap with $F_D$ (block 214).

4. Finally, the UE may optionally inform the network node that the UE is using or has used the second UL transmission configuration on at least one UL CC and/or has changed the frequency of operation of the ID-EWS to reduce the effect of IMD due to transmission on UL CCs (block 214).

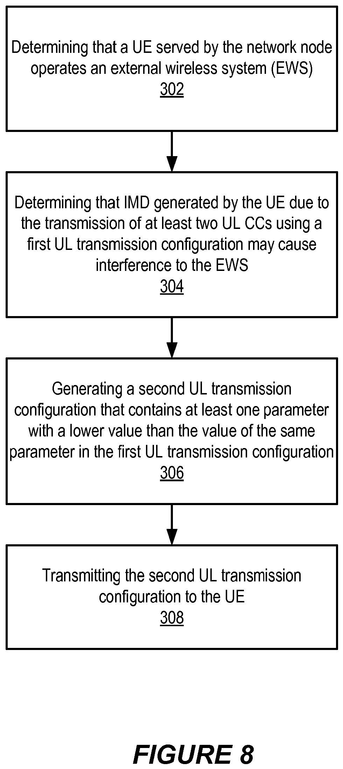

Figure 8 is a block diagram that illustrates operations of a network node, such as an eNB, serving a UE that is configured to perform carrier aggregation with at least 2 UL component carriers (CCs). Referring to Figure 8, the network node may first determine that a UE served by the network node operates an external wireless system (EWS) (block 302). For example, the network node may determine that the UE is operating or is expected to operate at least one in-device external wireless system (e.g. GNSS) over a at least a first frequency (f1).

The network node may then determine that intermodulation distortion (IMD) generated by the UE due to the transmission of at least two uplink (UL) component carriers (CCs) using a first UL transmission configuration may cause interference to the EWS (block 304). In particular, the network node may estimate, determine, calculate or otherwise obtain information about intermodulation products (IMD) generated or expected to be generated by the UE due to the transmission on at least the 2 UL CCs.

In response to that determination, the network node may configure the UE with a second UL transmission configuration for use by the UE for transmitting on at least one of UL CCs. In particular, the network node may generate a second UL transmission configuration that contains at least one transmission parameter with a lower value than a corresponding transmission parameter in the first UL transmission configuration (block 306) and transmit the second UL transmission configuration to the UE (block 308).

The UE may transmit using the second UL transmission configuration instead of the first UL transmission configuration on at least one of the UL CCs provided that the power of the estimated IMD is above a threshold and a frequency ($f_D$) of the IMD partly or fully overlaps with the frequency ($f_1$) of the EWS.

In some embodiments, the network node may allocate reduced UL transmission resources to the UE in response to determining that IMD generated by the UE due to the transmission of at least two UL CCs using the first UL transmission configuration may cause interference to the EWS. Resources freed up by the allocation may be re-allocated to another UE.

In some embodiments, a measurement period for a UL radio network measurement may be extended in response to determining that IMD generated by the UE due to the transmission of at least two UL CCs using the first UL transmission configuration may cause interference to the EWS.

The network node may receive information from the UE that the UE is using or has used the second UL transmission configuration for transmitting signals on at least one UL CC and/or has changed the frequency of operation of the ID-EWS to reduce the effect of IMD due to transmission on UL CCs.

Some embodiments disclosed herein provide systems/methods for UL carrier aggregation in which interference towards an external wireless system (such as in-device GPS) when the UE is configured to perform UL CA (i.e. with at least 2 UL CCs) is reduced.

Even with reduced interference, the UE can still operate using UL CA. Furthermore, there may be no need to turn off all the UL SCCs in order to reduce interference to an external wireless system. In addition, UL resources, such as UL RBs, can be utilized more efficiently when the UE does not operate using full a UL configuration.

The present disclosure describes many of the embodiments for CA with two UL CCs, however, the methods described herein can be extended for more than two UL CCs that aggregated for any UE. Moreover, even in the case of 2 UL CCs, the UE can be configured with more than 2 DL CCs.

In the following discussion, it is assumed that the UE is configured with at least 2 UL CCs which typically belong to different frequency bands. However the configured UL CCs may belong to the same band or some of them may be in the same band while others may be in different bands. The embodiments are applicable regardless of whether the configured UL CCs belong to the same frequency band. The configured UL CCs may be activated or deactivated, or some of them may be activated while others may be deactivated.

Similarly, for dual connectivity although the examples shown herein include two network nodes (or cells) that serve a UE in dual connectivity operations, the embodiments described herein may equally apply to DC operation with more than two nodes or serving cells, unless otherwise mentioned. Thus, in the following descriptions, one MeNB and one SeNB are described. However, the algorithms described herein are also valid for one MeNB and more than one SeNBs, unless otherwise mentioned.

Finally, the methods described herein may be equally applicable to both carrier aggregation (CA) and dual connectivity (DC) scenarios, unless otherwise mentioned.

As discussed above, an example of an EWS is GNSS or A-GNSS. Some embodiments described herein may apply in particular to the mitigation of interference caused by UL aggregation towards a GNSS or A-GNSS receiver. The embodiments apply both when the EWS (e.g. GNSS or A-GNSS) is located in the same wireless device (aka, an in-device EWS) that generates interference towards EWS due to UL CA and/or when the EWS the is not located on the wireless device that generates interference towards EWS due to UL CA, i.e. the EWS is located on another aka external device.

Briefly, the following operations may be performed to mitigate interference caused by UL aggregation towards an EWS. A network node, such as an eNB or radio network controller may receive information about potential interference to an EWS, such as a GNSS, and determine that reduced UL configurations may be used by the UE. The network node may sending suggestions/instructions to the UE regarding UL transmission configurations, or commands for deactivating the secondary carrier. Alternatively or additionally, the network node may allocate reduced UL configurations for UL operations on UL CCs (e.g. in band A and/or band B). Unused resources may be allocated to other UEs.

To mitigate interference caused by UL carrier aggregation, the UE may discard network node assigned UL configurations and/or adjusting the measurement configuration. These actions may be performed autonomously, based on a pre-defined rule, and/or in response to an indication from the network node. The UE may inform the network of the autonomous decision, and/or may send an indication to the network node regarding potential time duration over which interference due to UL CA occurs when receiving EWS signals. These operations are described in more detail below.

**I. Reducing UL transmission configurations based on the intermodulation product**

According to some embodiments, a set of reduced UL transmission configurations for LTE carriers (e.g. in band Bx and/or LTE band By or in the same band Bx or band By) is used by the UE in order to reduce/limit the interference to external wireless system. The term "reduced UL transmission configuration" may also be referred to as a limited UL transmission configuration or a second UL transmission configuration. In the reduced or limited or second UL transmission configuration for an UL CC, the value of at least one UL transmission parameter is lower than the value of the same UL transmission parameter for the same UL CC in a "full UL transmission configuration." The full UL transmission configuration is also interchangeably referred to as a first UL transmission configuration or original UL transmission configuration or even non-reduced UL transmission configuration.

In some embodiments, the UE is allowed to control the UL transmission format. In this case the UL format may be decided by the UE autonomously.

The designations Bx and By refer to the carriers involved in the aggregation. Although the present disclosure describes embodiments in which two carriers are used, some embodiments may apply to scenarios that use more than two carriers as well. Typically, these carriers belong to different frequency bands. The embodiments disclosed herein can also apply in the scenario on which the two UL carriers are within a single frequency band.

The external wireless system can operate in an adjacent channel or a non-adjacent channel. In general, the method applies in all cases where the inter-modulation product causes interference to transmission/reception of external wireless system in the same device.

**A. Triggering mechanism to reduced UL transmission**

The use of a reduced UL transmission configuration on at least one of its configured UL CCs may be initiated by the UE based on one or more of the following triggers:

**1. Autonomous decision by the UE**

In this case the UE may detect that interference at EWS due to UL CA is above a threshold by observing in-device EWS received signal quality and/or by determining IM product (IMP) generated by UL CA. The UE may also internally receive information from an in-device-EWS that its reception quality is below a threshold e.g. due to IMD. The UE may even receive an indication from a network node that the signal quality at the EWS located on external device is degraded due to IMD generated by the UE. Based on the detection of an impact of IMP on the EWS, the UE may decide to autonomously adopt a reduced UL transmission configuration for at least one UL CCs, i.e. reduce values of one or more parameters in the UL transmission configuration for one or more UL CCs.

**2. Pre-defined rule**

In some embodiments, the UE may decide to apply a reduced uplink configuration on one or more UL CCs when one or more pre-defined conditions are met. An example of such condition is that in-device EWS (e.g. GNSS) signal quality falls below a threshold. Another example of such condition is that the power of the IMP generated by the UL CCs is above a threshold. Yet another example of such condition is that the power of the IMP for certain order(s) (e.g. order 3) generated by the UL CCs is above a threshold.

### 3. Indication received from a network node

In some embodiments, the UE may reduce a UL CC configuration in response to an indication from a network node. In this case, there are two alternatives:

a. Autonomous decision by the network node: In this case the UE may apply the reduced uplink configuration on one or more UL CCs only when explicitly permitted/instructed by the network node. For example, the network node may determine based on pre-defined requirements that in CA operation certain UL CCs may cause IMD to certain types of EWS systems, such as a GNSS, which is expected to be operational under certain scenarios, such as when UE is outdoors and/or moving at a higher speed. Based on this information, the network node may indicate the UE that it can operate one or more UL CCs with their respective reduced UL configurations.

b. Based on UE request to use reduced UL configuration: In this alternative the UE may first detect an impact of IMD on an EWS and then may send a request to the network node. The request indicates that the UE needs to use a reduced UL configuration due to the impact on EWS operation of IMD from UL CA. In response to the received request, the network node may allow the UE to apply a reduced UL configuration that may be pre-defined, based on UE autonomous selection, or assigned by the network node. The UE may also notify the network node by using suitable signaling (e.g. RRC, MAC, etc.) that a predefined reduced UL allocation is used on one or more UL serving cells (e.g. PCell/SCell) and/or that the UE Tx power and/or UE power headroom on the SCell has changed. Such an indication may be made by way of a negative power headroom report (PHR) on the SCell, for example. The UE may also autonomously limit the range of the PHR that is allowed. For example, the UE may report a maximum PHR of 10 dB instead of 40 dB. This will ensure that the network node allocates limited UL RBs to the UE, for example, up to 10 RBs instead of 50 RBs. The UE can indicate that it has limited the PHR when the UE has a UL grant, i.e., UL resources for UL transmission. As a particular example, the UE may indicate the need for one or more of the following, and in response the network node may allow the UE to transmit according to one or more requests:

i. The UE indicates that it needs to reduce SCell TX power (e.g. the Pcmax). This can be some fixed SCell TX power level (e.g. 0 dBm) which can be pre-defined. The pre-defined level in turn may depend on the UL CA or band combination (which reflects the IMD order) as explained below.

ii. The UE indicates that it needs UL RB restrictions on one or more UL serving cells; the applicable UL RB restriction depends on IMD order (e.g. IM3, IM5 etc) and can also be pre-defined as explained below. This may also depends on the strength of the IMD product falling into GNSS receiver.

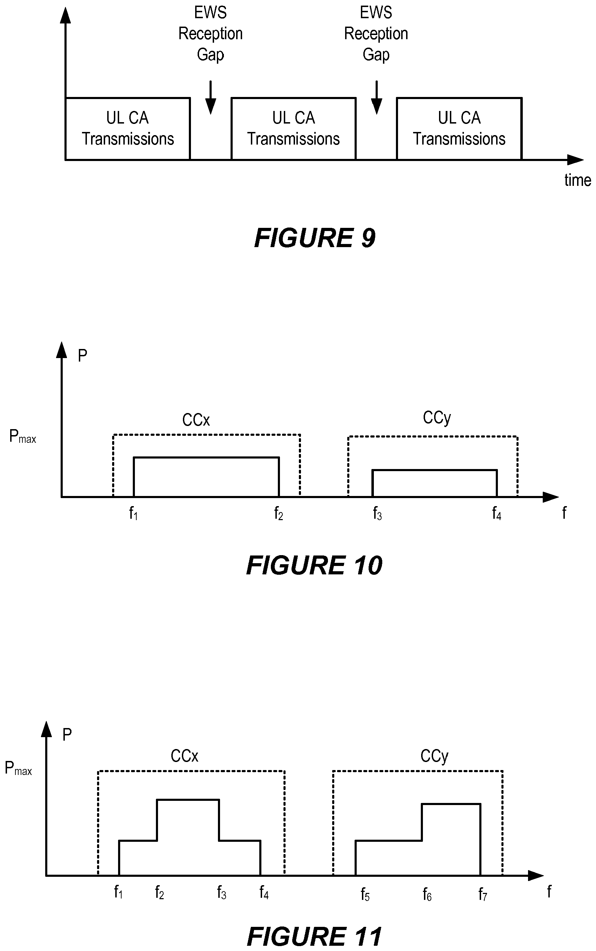

iii. The UE needs to create transmission gaps when transmitting signals in one or more UL serving cells. The UE may operate the EWS (e.g. GNSS) during the gaps, and between the gaps the UE may transmit on UL serving cells. The gaps or pattern of gaps can also be pre-defined (e.g. SCell DTX pattern as described in more detail below). For example, **Figure 9** illustrates the creation of gaps in the UL CA transmission during which an EWS can receive signals with reduced IMD impact.

iv. The UE needs to limit the maximum value of PHR to ensure network node does not assign larger RBs (e.g. maximum of up to 10 RBs) in one transmission time interval (TTI) and/or does not allocate more than certain amount of UL Tx power (e.g. not more than 0 dBm) that the UE has to transmit.

In all the above cases the reduced UL configuration to be applied on any UL CC may be pre-defined, pre-configured at the UE by the network node, autonomously determined by the UE, or a combination thereof. For example, the reduced UL configuration may be pre-defined for one UL CC while the reduced UL configuration for the other UL CC may be received by the UE from the network node.

### B. Adapting to reduced UL transmission configuration

The reduced UL transmission configuration may be achieved by reducing or lowering values of physical parameters, such as number of UL physical channels or physical signals (e.g. reduced number of RBs, reduce or puncturing or not using certain resource elements, not transmitting certain reference signals (such as SRS) in one or more or all resource elements etc), UL transmit power, UL bit rate, modulation order, modulation and coding scheme (MCS), etc., compared to the corresponding parameters used in the full UL transmission configuration. The reduced configuration may further include selectively muting one or more UL CCs.

The following sub-sections contain several examples of reduced UL configurations that the UE can apply on one or more configured UL CCs when operating in UL CA.

**1. Adapting UL physical resources per CC based on the intermodulation product**

According to some embodiments, one or more UL physical resources (e.g. UL resource blocks (RBs), UL resource elements (REs), reference signals, etc.) are adapted in response to the IMP levels. As explained above, the intermodulation product is a function of the carrier frequencies. The position of the UL transmitted signals (e.g. such as RBs location, RE location etc) in the frequency domain is selected by the UE in a way that IMD products generated towards the EWS system are reduced or avoided.

For example, assume that two carriers at f1 and f2 are used in UL CA. Depending on where the two carriers are, e.g. whether their main intermodulation products interfere with the external wireless band, or how close they are to external wireless frequency band, the resource block allocation on the two carriers can be adapted such that the interference to the external wireless is reduced. The RB allocation in this case can be the position of the RBs in frequency domain, the size of allocation or both.

One alternative is the method where the UL carrier aggregation is between carriers Bx and By, the total number of RBs should satisfy the following condition:

$$RB_x + RB_y \leq RB_{tot},$$

Where $RB_{tot}$ is the total number of uplink RBs, and $RB_x$ and $RB_y$ are the number of available RBs per carrier.

The position of the RBs is selected between the carriers to avoid IMP

$$RB_{x,\,end} - RB_{x,\,start} \leq RB_x,$$

$$RB_{y,\,end} - RB_{y,\,start} \leq RB_y,$$

where $RB_{x,\,start}$, $RB_{x,\,end}$, $RB_{y,\,start}$ and $RB_{y,\,end}$ are the combination of RBs between carrier X and carrier X which do not create IMD products

The UL physical resources (R1, R2) parameters can be specified in the form of a look up table for each combination of UL carriers, referred to as carrier A and carrier B for ease of reference. The carriers A and B can be in the same band or they can be in different bands. For example, carrier A and carrier B can belong to band A and band B respectively. The examples of lookup table mapping the UL CA combination and the UL reduced RBs configuration for each type of EWS system are shown in Tables 1-4 below. In Tables 1-4, X and Y may indicate the frequencies occupied by the carrier, for example X=1920-1940MHz would represent a 20MHz E-UTRA carrier within 1920-1940MHz or it may be composed of a carrier frequency and a channel bandwidth, for example, X=1930MHz, 20MHz. X and Y can be represented in other ways. For example, they may indicate the spectrum position for X and Y to which the UL reduced configuration apply.

As an example, the reduced UL RBs mean that the UE may transmit only up to 25 RBs out of 50 RBs on one or more CCs in case the UL channel BW is 10 MHz (i.e. 50 RBs).

In yet another example the reduced UL RBs may mean that the UE may transmit only up to 25 RBs in the center of BW (i.e. transmits only central 25 RBs) out of the total of 50 RBs on one or more CCs.

Table 1: UL reduced configuration based on UL RBs for each UL CC in UL CA for protection of different EWS system (Example 1)

| LTE UL Carrier A | LTE UL Carrier B | EWS #1 | ... | EWS #n |
|---|---|---|---|---|
| X | Y | $(RB_{x1,start}, RB_{x1}, RB_{y1,start}, RB_{y1})$ | | $(RB_{xn,start}, RB_{xn}, RB_{yn,start}, RB_{yn})$ |
| ... | ... | ... | ... | |
| ... | ... | ... | ... | |

Table 2: UL reduced configuration based on UL RBs for each UL CC in UL CA for protection of different EWS system (Example 2)

| LTE UL Carrier A | LTE UL Carrier B | EWS #1 | ... | EWS #n |
|---|---|---|---|---|
| X | Y | $(RB_{x1,start}, RB_{x1,end}, RB_{y1,start}, RB_{y1,end})$ | | $(RB_{xn,start}, RB_{xn,end}, RB_{yn,start}, RB_{yn,end})$ |
| ... | ... | ... | ... | |
| ... | ... | ... | ... | |

Table 3: UL reduced configuration based on UL RBs for each UL CC in UL CA for protection of different EWS system (Example 3)

| LTE UL Carrier A | LTE UL Carrier B | EWS #1 | ... | EWS #n |
|---|---|---|---|---|
| X | Y | $(RB_{x1}, RB_{x1,end}, RB_{y1}, RB_{y1,end})$ | | $(RB_{xn}, RB_{xn,end}, RB_{yn}, RB_{yn,end})$ |
| ... | ... | ... | ... | |
| ... | ... | ... | ... | |

Further, there may be different possible allocations that ensure the avoidance of IMD. In the example shown in Table 4, there can be different combinations of RBstart and number of RB allocated that ensures no interference into EWS #1.

**Table 4: UL reduced configuration based on UL RBs for each UL CC in UL CA for protection of different EWS system (Example 4)**

| LTE UL Carrier A | LTE UL Carrier B | EWS #1 | ... | EWS #n |
|---|---|---|---|---|
| X | Y | $(RB_{x11\,start,}$ $RB_{x1,}$ $RB_{y11start,}$ $RB_{y1})$ | | $(RB_{xn\,start,}$ $RB_{xn,}$ $RB_{yn\,start,}$ $RB_{yn})$ |
| X | Y | $(RB_{x12\,start,}$ $RB_{x12,}$ $RB_{y12start,}$ $RB_{y12})$ | ... | |
| ... | ... | ... | ... | |

## 2. Adapting power allocation per CC based on the intermodulation product

According to this embodiment, the power within each UL component carrier is distributed such that the IMD interference to the external wireless system is reduced.

**Figure 10** shows an example of a case in which the power in the two UL CCs (in the same or different bands) is allocated so that the intermodulation product is reduced. In the example of **Figure 10,** CCx is defined between frequencies $f_1$ and $f_2$, while CCy is defined between frequencies $f_3$ and $f_4$. For example, the UL transmit power on both CCx and CCy can be set to X dB lower than the maximum power (e.g. 20 dBm per CC) where X can be 3 dB or more depending upon the power of the generated IMD. This means the UE never exceeds power on CCx or CCy by ($P_{max,cc}$ - X) dBm. In yet another example, the UL transmit power on one of the CCs (e.g. on CCy) can be set to Y dB lower than the maximum power (e.g. 20 dBm per CC) where Y can be 6 dB or more depending upon the power of the generated IMD. This means the UE never exceeds power on CCy by $(P_{max,cc}$ - Y$)_{dBm.}$

When IMD does not cause any problem to an EWS, such as when the EWS is not used or used in a band where there is no IMD impact, then the UL power on CCx and/or CCy can be restored up to a normal level e.g. to the first UL configuration level.

## 3. Combined adaption of physical resources and power allocation to reduce intermodulation product

According to this embodiment, a combined power and UL resource allocation (e.g. UL RBs) can be reduced such that the interference due the intermodulation product is reduced. This method may be used in case the reduced UL RBs or reduced UL transmit power alone is not enough to alleviate the problem of IMD towards the EWS system.

In one example, the UE may first transmit with only reduced UL RBs on one or more UL CCs, and in case IMD still degrades the EWS reception quality, then the UE may further reduce the UL transmit power on one or more UL CCs.

In yet another example, the UE may first transmit with only reduced UL transmit power on one or more UL CCs, and in case IMD still degrades the EWS reception quality, then the UE may further apply the reduced UL RBs on one or more UL CCs.

In yet another example the UE may transmit with both reduced UL transmit power and reduced UL RBs in case the received quality (e.g. SNR, SINR, BLER, BER etc) of EWS signal is required to be above a certain threshold.

Table 5 below shows an example of a lookup table for the UL transmission configuration in Carrier A and Carrier B when external wireless system (EWS) is used by UE in EWS bands (e.g. GPS L1, GPS L2,...). In Table 5, RBx, RBy can be specified but not limited as described above, and Ptx, Pty are the transmission power levels.

**Table 5: UL reduced configuration based on UL RBs and UL transmit power for each UL CC in UL CA for protection of different EWS system (Example 1)**

| LTE UL band configuration | | UL transmission configuration in band A and band B | | |
|---|---|---|---|---|
| LTE UL Carrier A | LTE U L Carrier B | EWS #1 | ......... | EWS #n |
| X | Y | $\{(RB_x, P_x)_A, (RB_y, P_{ty})_{1-B}\}$ | | $\{(RB_x, P_x)_{n-A} (RB_y, P_{ty})_{n-B}\}$ |
| .... | .... | | | |
| .... | .... | | | |

One example of joint RB and power allocation is illustrated in **Figure 11.** In particular, **Figure 11** illustrates an example of RB and power allocation for two different component carriers such that the IMD to a neighboring external wireless system is reduced. As shown in **Figure 11,** the transmit power can be reduced more for RBs in certain frequency ranges (e.g., $f_1$-$f_2$, $f_3$-$f_4$, $f_5$-$f_6$) than in other frequency ranges (e.g., $f_2$-$f_3$, $f_6$-$f_7$).

### 4. Adapting transport channel size per CC based on the intermodulation product

According to this embodiment, some uplink transmission parameters related to the UL transport channel that is mapped onto one or more UL physical channels (e.g. PUSCH) may be adapted to reduce the intermodulation distortion product. Examples of parameters related to the UL transport channel are the number of transport blocks per transport channel, transport block size per transport block, etc. The reduction in UL transport channel characteristics may also reduce UL RBs and UL transmit power on a CC. This will in turn reduce IMD towards the EWS system.
In order to reduce UL transport channel characteristics the UE may also have to lower the data rate and/or switch to a service that does not require a higher data rate.

### 5. Adapting modulation and coding per CC based on the intermodulation product

According to this embodiment, uplink transmission parameters related to the coding and modulation used for transmitting UL signals on a CC can also be adapted to reduce IMD. For example, if reception quality of the EWS is below a predefined threshold due to effects of IMD from UL CA, then the UE may transmit UL signals on one or more UL CCs using:

> a. a code rate (R) that is not larger than a threshold. For example, the UE may use a coding rate for a convolution code of not more than R= 1/3, and/or
> b. only use a certain type or order of modulation, e.g. only QPSK or 8-PSK, and to avoid using a higher order modulation scheme, such as 16QAM, 64 QAM or higher.

The use of a reduced UL modulation and coding scheme (MCS) in UL CCs will require the UE to transmit at lower uplink power and/or using lower number of UL physical resources. This in turn may reduce the IMD and may improve the EWS reception quality.

### 6. Releasing/setting up of an SCell according to a pattern to limit the intermodulation product

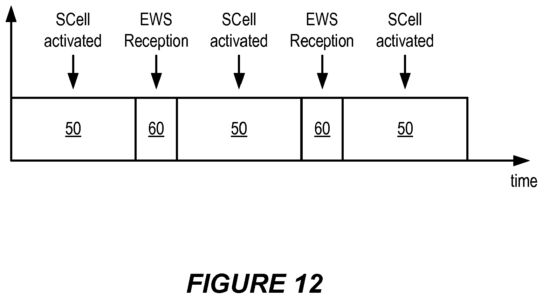

According to this embodiment, the SCell can be deconfigured or deactivated on the UL transmission in order to reduce the intermodulation distortion products. Typically, the network node deconfigures or deactivates the SCell e.g. when there is no data to schedule. The SCell may be deactivated in both UL and DL direction, as deactivation in only the UL or DL is not possible. However, the SCell can be deconfigured in only the UL, i.e. deconfiguration in the DL is allowed.
The deactivation or deconfiguration of the SCell can be referred to as releasing of the SCell. Similarly, the activation or configuration of the SCell can be referred to as setting up the SCell.
In this embodiment, the UE is allowed to deactivate or deconfigure one or more SCells according to a certain pattern in time. For example, referring to Figure 12, the UE can be pre-configured with a pattern that includes a first set of frames or subframes 50 in which a certain SCell can be activated or configured, and a second set of frames or subframes 60 in which the same SCell can be deactivated or even deconfigured by the UE. One or more SCell patterns (or SCell operation patterns) may also be pre-defined, and the UE may choose one of the patterns when needed due to EWS operation as described below.
The UE can autonomously start using a certain SCell according to the pre-configured SCell pattern whenever (a) the UE is configured with UL CA, (b) the UE starts operating one or more EWS systems, and (c) UL CA causes IMD problems towards at least one of the EWS systems being operated by the UE.
The UE may also indicate to the network node when the UE has started or has stopped operating on a certain SCell according to the pre-configured SCell pattern associated with that SCell.
For example, the UE may send an RRC message or a MAC message or a certain type of UL signal to indicate that the UE is using a particular SCell according to a predefined pattern. For example, the UE can send a certain type of CQI value or index, such as CQI index 0 to indicate that the UE has stopped using pattern or the largest CQI index to indicate that the UE has started using the pattern. The UE may also signal the approximate time duration over which the secondary carrier will be used according to a pattern.
During the time period when the SCell is set up (e.g. activated), the UE may not use the EWS to avoid the impact of IMD on EWS operation. However, during time periods (e.g. subframes) when the SCell is released (e.g.

deactivated or deconfigured), the UE may use the EWS.

Examples of such patterns are:

a. A subframe level bit map for a configured SCell1: [010101...] corresponding to [Da A Da A Da A....]; where Da = subframe where the SCell can be deactivated and A = subframe where the SCell cannot be deactivated i.e. is always activated.

b. A subframe level bit map for a configured SCell1: [0 1 1 1 0 1...] corresponding to [Da A A A Da A....]; where Da = subframe where the SCell can be deactivated and A = subframe where the SCell cannot be deactivated i.e. is always activated.

c. A subframe bit map for a configured SCell1: [0 1 0 1 0 1...] corresponding to [Dc C Dc C Dc C....]; where Dc = subframe where the SCell can be deconfigured and A = subframe where the SCell cannot be deconfigured i.e. is always configured.

d. A frame level bit map for a configured SCell1: [0 1 0 1 0 1...] corresponding to [Da A Da A Da A....]; where Da = frame where the SCell can be deactivated and A = frame where the SCell cannot be deactivated i.e. is always activated.

e. A frame bit map for a configured SCell1: [0 1 0 1 0 1...] corresponding to [Dc C Dc C Dc C....]; where Dc = frame where the SCell can be deconfigured and A = frame where the SCell cannot be deconfigured i.e. is always configured.

Within a pattern when the UE transmits on an SCell (i.e. in subframes where the SCell is activated), the UE may apply a reduced UL transmission configuration as described in previous embodiments.

## II. Adapting the frequency of EWS system to avoid IMD due to UL CA operation

For some types of EWS, the UE may also be capable of operating the EWS on different frequency bands or a different range of carrier frequencies. For example, the UE may be capable of operating a WLAN (aka WiFi) on the 2.4 GHz ISM band or in the 5 GHz range. In another example, the UE may be capable of operating a GNSS on different frequency bands or ranges of frequencies. For example the UE may be capable of receiving GPS in one or more of GPS bands L1 (1575.42 MHz), L2 (1227.60 MHz), L3 (1381.05 MHz), L4 (1379.913 MHz) and L5 (1176.45 MHz).

In this embodiment, when a UE configured with UL CA experiences the impact of IMD generated by UL CA on the reception quality of one or more EWS that UE is also operating, the UE may take one or more of the following actions.

First, the UE may change the frequency f1 at which the EWS operates to another frequency f2, wherein at f2 the impact of IMD is reduced. The frequencies f1 and f2 may belong to the same frequency band or to different frequency bands. For example, the UE operating a WLAN may switch from 5 GHz to 2.4 GHz if the IMD affects the WLAN operation in 5 GHz.

Second, the UE may change its current receiver R1 to a new receiver R2 for receiving signals on EWS, wherein receiver R2 is more robust compared to R1. For example, the use of R2 for receiving EWS signals may reduce the impact of IMD due to UL CA on EWS reception.

The UE may also apply one or more actions related to the reduced UL transmission configurations described above if necessary (e.g., if IMD impact is not adequately reduced due to the change of EWS frequency/band).

The UE may also indicate to the network node that it is has changed the frequency/band at which the EWS is operating to alleviate the impact of IMD on an EWS.

## III. Adapting one or more radio operational procedures to account for reduced UL configuration

### A. Discarding a current allocation and using a reduced configuration

According to this embodiment, when the UE starts transmission to or reception from the external wireless system, the UE may discard the current resource allocation for UL transmission and use a reduced configuration in order to reduce the interference due to the IMD to the external wireless system. The UL reduced configuration (which may, for examples, be based on pre-defined configuration) is typically less than or equal to the UL resource allocation received from the network node. For example, the reduced UL configuration may include 10 RBs whereas the UL resource allocation granted by the networok node may include 15 RBs. However, if the reduced UL configuration is larger than the currently allocated UL resource allocation, then in one example the UE may use the allocated UL resource allocation for UL transmission on one or more UL CCs. In another example, the UE may start using the SCell according to an SCell pattern as described above.

As an option, the UE may also send some indication (e.g. CQI 0 in each band) to the network node that a reduced UL transmission configuration is being used in one or more UL CCs, which may belong to band A and/or band B.

The UE may also send information to the network node about the estimated time for how long it may use the external wireless system and also for how long it may apply the reduced UL transmission configurations.

**B. Adapting a measurement procedure to account for reduced configuration**

According to this embodiment, when a UE applies a reduced UL configuration to one or more UL CCs to reduce the impact of IMD on EWS operation, the UE may adapt one or more measurement procedures to partially offset the impact of the reduced UL configuration.

The adaptation of measurement procedures performed by the UE can, for example, include (a) extending the measurement period with respect to a certain pre-defined period for performing certain radio measurements, especially those involving uplink signals (e.g., UE Rx-Tx time difference measurements etc), (b) determining the time period during which the UE may use reduced UL configuration and informing the network node accordingly, and (c) using the times, such as subframes, where the UE does not transmit on the UL for post processing the measurement samples obtained during the time when UE transmits UL signals.

**IV. Method in a network node of adapting one or more radio operational procedures to account for reduced UL configuration**

According to this embodiment, the network node serving a UE (e.g. a eNB) may obtain information that the UE is applying or has applied a reduced UL configuration to one or more UL CCs to reduce the impact of IMD on EWS operation. For example, a UE may inform the network node explicitly or implicitly that a reduced UL configuration is used on one or more UL CCs to reduce impact of IMD on EWS operation. The network node may adapt one or more procedures associated with the UE based on the information that the UE is using or has used a reduced UL configuration.

The adaptation of procedure performed by the network node can, for example, include one or more of the following:

- Extending the measurement period with respect to a pre-defined period for performing certain UL radio measurements (e.g. SNR, SINR, timing advance (TA), etc.), in response to determining that UE is using reduced UL configuration.
- Determining the allowed time that the UE may use reduced UL configuration and configuring the UE with the determined time and/or adapting a measurement period based on the determined time.
- Obtaining from the UE the time during which it expects to use the reduced UL configuration and confirming this with the UE.
- Adapting scheduling based on the reduced UL configuration. For example, the network node may not allocate more than reduced UL configurations for UL operations on band A band B, and may instead allocate remaining resources to other UEs.
- Configuring measurement gaps, or a measurement requiring autonomous gaps (e.g. CGI), such that they accommodate the reduced configuration.

EXAMPLE UE AND RAN

Non-limiting example user equipment nodes (UEs) can include, but are not limited to, tablet computers, mobile terminals, smart phones, desktop computers, laptop embedded equipped (LEE), laptop mounted equipment (LME), vehicle borne terminals, etc.

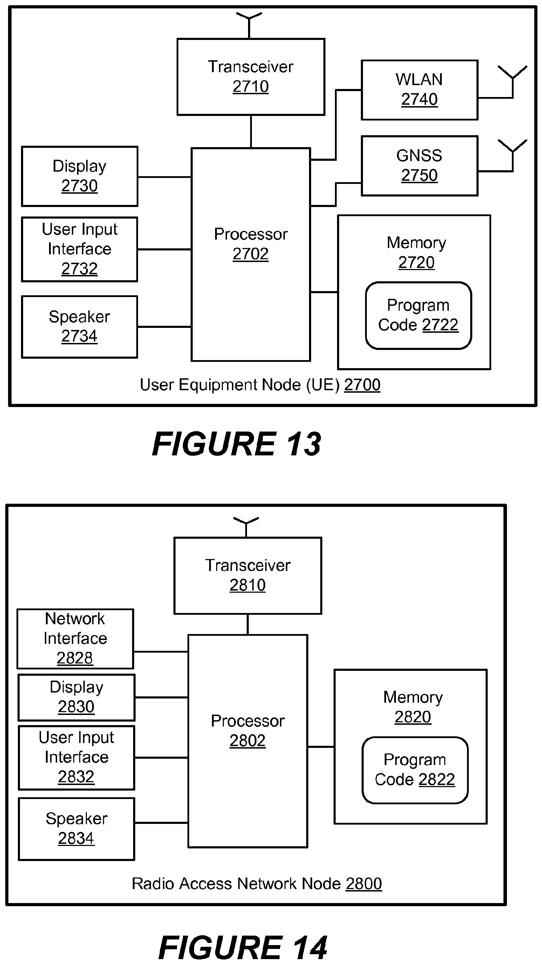

Figure 13 is a block diagram of a UE 2700 that is configured to perform operations according to one or more embodiments disclosed herein. The UE 2700 includes at least one transceiver 2710, at least one processor 2702, and at least one memory 2720 containing program code 2722. The UE 2700 may further include a display 2730, a user input interface 2732, and a speaker 2734.

The UE 2700 further includes circuitry that supports at least one EWS. For example, the UE 2700 may include a WLAN module 2740 that enables communication over a WLAN interface and a GNSS module 2750 that receives and processes GNSS signals, such as GPS signals. Each of the WLAN module 2740 and the GNSS module 2750 may include a separate antenna that is tuned to transmit/receive signals in the respective EWS.

The transceiver 2710 is configured to communicate with a RAN node and/or other UEs in a D2D mode through a wireless air interface using one or more of the radio access technologies disclosed herein. The processor 2702 may include one or more data processing circuits, such as a general purpose and/or special purpose processor, e.g., microprocessor and/or digital signal processor. The processor 2702 is configured to execute computer program instructions of the program code 2722 stored in the memory 2720 to perform at least some of the operations described herein as being performed by a UE.

Figure 14 is a block diagram of a RAN node 2800 that is configured according to one or more embodiments disclosed herein. The RAN node 2800 can include at least one transceiver 2010, at least one network interface 2828, at least one processor 2802, and at least one memory 2820 containing program code 2822.

The transceiver 2810 is configured to communicate with UEs and other nodes using one or more of the radio access technologies disclosed herein, including in a D2D mode. The processor 2802 may include one or more data processing circuits, such as a general purpose and/or special purpose processor, e.g., microprocessor and/or digital signal processor, that may be collocated or distributed across one or more networks. The processor 2802 is configured to execute computer program instructions of the program code 2822 stored in the memory 2820 to perform at least some of the operations described herein as being performed by a RAN node. The network interface 2828 communicates with other RAN nodes and/or a core network.

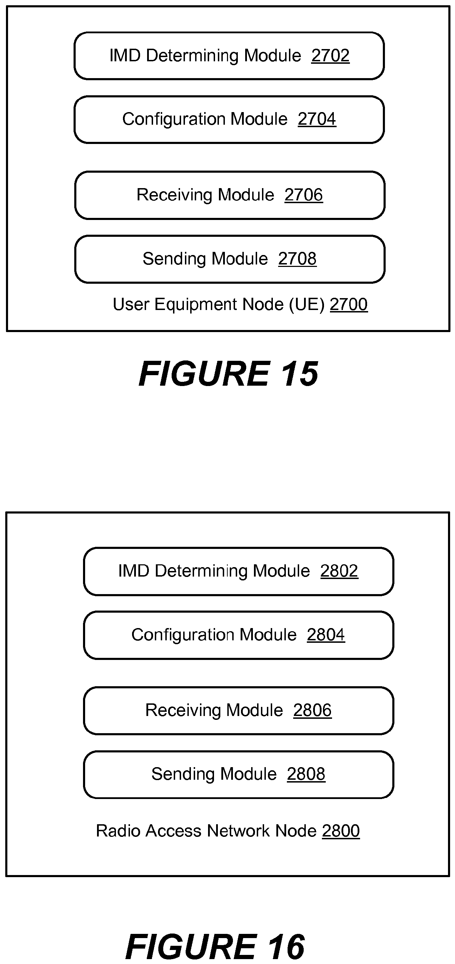

Figure 15 illustrates modules residing in the UE 2700 that perform operations as disclosed herein according to some embodiments. The UE 2700 includes an IMD determining module 2702, a configuration module 2704, a receiving module 2708 and a sending module 2710. The IMD determining module 2702 can estimate, measure or otherwise determine a level of IMD generated by UL CA, and determine its effect or potential effect on the operation of an EWS. The configuration module 2704 can obtain a modified UL transmission configuration that alleviates the effect of IMD on the operation of the EWS. For example, the modified UL transmission configuration may have a transmission parameter with a lower value than a corresponding transmission parameter in a UL transmission configuration that resulted in unacceptable levels of IMD. The modified UL transmission configuration can be generated autonomously by the UE, or it can be received from a network node. The receiving module 2706 can receive a modified UL transmission configuration from a network node. The sending module 2708 transmits notifications to the network node that the UE has adopted a modified UL transmission configuration, and the duration that the modified UL transmission configuration will be used. The modules 2702, 2704, 2706 and 2708 may perform other operations disclosed herein.

Figure 16 illustrates modules residing in the RAN node 2800 that perform operations as disclosed herein according to some embodiments. The RAN node 2800 includes an IMD determining module 2802, a configuration module 2804, a receiving module 2806 and a sending module 2808. The IMD determining module 2802 can estimate, measure or otherwise determine a level of IMD generated by UL CA performed by a UE that is managed by the RAN node 2800. The configuration module 2804 can generate a modified UL transmission configuration that alleviates the effect of IMD on the operation of the EWS. For example, the modified UL transmission configuration may have a transmission parameter with a lower value than a corresponding transmission parameter in a UL transmission configuration that resulted in unacceptable levels of IMD. The receiving module 2806 receives messages from the UE, such as an indication that the UE has adopted a modified UL transmission configuration. The sending module 2808 transmits data to the UE, such as transmitting a modified UL transmission configuration to the UE. The modules 2802, 2804, 2806 and 2808 may perform other operations disclosed herein.

ABBREVIATIONS

| | |
|---|---|
| BS | Base Station |
| CID | Cell Identity |
| CRS | Cell-specific Reference Signal |
| DL | Downlink |
| HSPA | High Speed Packet Access |
| ID | Identity |
| IDC | In-Device Coexistence |
| IM | Inter-modulation product |
| IMD | Inter-modulation product |
| IMP | Inter-modulation product |
| ISM | Industrial, Scientific and Medical |
| L1 | Layer 1 |
| L2 | Layer 2 |
| LTE | Long Term Evolution |
| MAC | Medium Access Control |
| MDT | Minimization of drive test |
| OFDM | Orthogonal Frequency Division Multiplexing |
| PDCCH | Physical Downlink Control Channel |
| PDSCH | Physical Downlink Shared Channel |
| PHICH | Physical Hybrid ARQ Indicator Channel |
| PSS | Primary Synchronization Signal |
| RAT | Radio Access Technology |

| RE | Resource Element |
|---|---|
| RB | Resource Block |
| RRM | Radio Resource Management |
| RSRQ | Reference signal received quality |
| RSRP | Reference signal received power |
| SSS | Secondary Synchronization Signal |
| UE | User Equipment |
| UL | Uplink |
| RSTD | Reference signal time difference |
| RSSI | Received signal strength indicator |
| OTDOA | Observed time difference of arrival |

FURTHER DEFINITIONS AND EMBODIMENTS

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many modifications can be made to the embodiments without departing from the scope of the appended claims. Accordingly, the above disclosed subject matter is to be considered illustrative, and not restrictive, and the scope of the appended claims limits the possible embodiments intended to cover all such modifications, enhancements, and other embodiments, which fall within the scope of present inventive concepts. Thus, to the maximum extent allowed by law, the scope of present inventive concepts is determined by the scope of the following claims, and shall not be restricted or limited by the foregoing detailed description.

**Claims**

1. A method of operating a user equipment unit, UE (2700), comprising:

    determining (102) that intermodulation products generated by the UE due to the transmission of at least two uplink, UL, component carriers, CCs, using a first UL transmission configuration is causing interference to an external wireless system, EWS;
    obtaining (104) a second UL transmission configuration that contains at least one transmission parameter with a lower value than a corresponding transmission parameter in the first UL transmission configuration, wherein the at least one parameter comprises at least one of: a number of UL physical channels or physical signals, a UL bit rate, a modulation order, and/or a modulation and coding scheme, MCS;
    transmitting (106) at least one of the UL CCs using the second UL transmission configuration; and
    informing a network node (2800) of the length of time that the second UL transmission configuration will be used.

2. A method according to Claim 1, wherein the EWS is operated by the UE.

3. A method according to any of Claims 1-2, further comprising estimating (110) the intermodulation products generated by the transmission of the two UL CCs.

4. A method according to any previous Claim, further comprising:
changing a frequency of operation of the EWS in response to determining (102) that the intermodulation products generated by the UE due to the transmission of the at least two UL CCs using the first UL transmission configuration is causing interference to the EWS.

5. A method according to any previous Claim, further comprising informing (120) a network node of the use of the second UL transmission configuration.

6. A method according to any previous Claim, further comprising changing a position of resource blocks, RBs, and/or resource elements, REs, in the CCs to reduce interference due to intermodulation products at the EWS in response to determining (102) that the intermodulation products generated by the UE due to the transmission of the at least two UL CCs using the first UL transmission configuration is causing interference to the EWS.

7. A user equipment unit, UE (2700), comprising:

    a transceiver (2710) including a transmitter and a receiver configured to transmit and receive wireless communications; and
    a processor (2702) coupled to the transceiver, wherein the processor is configured to perform operations according to any of claims 1-6, and wherein the processor is further configured to receive wireless communications through the receiver of the transceiver and to transmit wireless communications though the transmitter of the transceiver.

8. A method of operating a network node (2800), comprising:

determining (302) that a UE (2700) served by the network node operates an external wireless system, EWS;
determining (304) that intermodulation products generated by the UE due to the transmission of at least two uplink, UL, component carriers, CCs, using a first UL transmission configuration may cause interference to the EWS;
generating (306) a second UL transmission configuration that contains at least one transmission parameter with a lower value than a corresponding transmission parameter in the first UL transmission configuration, wherein the at least one parameter comprises at least one of: a number of UL physical channels or physical signals, a UL bit rate, a modulation order, and/or a modulation and coding scheme, MCS, wherein the network node receives information of the length of time that the second UL transmission configuration will be used by the UE; and
transmitting (308) the second UL transmission configuration to the UE.

9. A method according to Claim 8, further comprising allocating reduced UL transmission resources to the UE in response to determining (304) that intermodulation products generated by the UE due to the transmission of at least two UL CCs using the first UL transmission configuration may cause interference to the EWS.

10. A method according to Claim 9, further comprising allocating to another UE resources freed as a result of allocating reduced UL transmission resources.

11. A method according to any of Claims 8-10, further comprising extending a measurement period for a UL radio network measurement in response to determining (304) that intermodulation products generated by the UE due to the transmission of at least two UL CCs using the first UL transmission configuration may cause interference to the EWS.

12. A method according to any of Claims 8-10, wherein generating the second UL transmission configuration comprises generating the second UL transmission configuration responsive to determining that the intermodulation products may cause interference to the EWS.

13. A network node (2800) comprising means adapted to perform the steps of a method according to any of Claims 8 to 10.

**Patentansprüche**

1. Verfahren zum Betreiben einer Benutzereinrichtungseinheit, UE, (2700), umfassend:

Bestimmen (102), dass Intermodulationsprodukte, die durch die UE aufgrund der Übertragung von mindestens zwei Uplink-Komponententrägern, UL-CCs, unter Verwendung einer ersten UL-Übertragungskonfiguration erzeugt werden, Interferenz bei einem externen drahtlosen System, EWS, verursacht;
Erhalten (104) einer zweiten UL-Übertragungskonfiguration, die mindestens einen Übertragungsparameter mit einem niedrigeren Wert als ein entsprechender Übertragungsparameter in der ersten UL-Übertragungskonfiguration enthält, wobei der mindestens eine Parameter mindestens eines umfasst von: einer Anzahl von physischen UL-Kanälen oder physischen Signalen, einer UL-Bitrate, einer Modulationsreihenfolge und/oder einem Modulations- und Codierschema, MCS;
Übertragen (106) mindestens einen der UL-CCs unter Verwendung der zweiten UL-Übertragungskonfiguration; und
Informieren eines Netzknotens (2800) über die Zeitdauer, die die zweite UL-Übertragungskonfiguration verwendet werden wird.

2. Verfahren nach Anspruch 1, wobei das EWS durch die UE betrieben wird.

3. Verfahren nach einem der Ansprüche 1 bis 2, ferner umfassend ein Schätzen (110) der Intermodulationsprodukte, die durch die Übertragung der zwei UL-CCs erzeugt werden.

4. Verfahren nach einem der vorstehenden Ansprüche, ferner umfassend:

Ändern einer Betriebsfrequenz des EWS als Reaktion auf das Bestimmen (102), dass die Intermodulationsprodukte, die durch die UE aufgrund der Übertragung der mindestens zwei UL-CCs unter Verwendung der ersten UL-Übertragungskonfiguration erzeugt werden, Interferenz beim EWS verursacht.

5. Verfahren nach einem der vorstehenden Ansprüche, ferner umfassend ein Informieren (120) eines Netzknotens über die Verwendung der zweiten UL-Übertragungskonfiguration.

6. Verfahren nach einem der vorstehenden Ansprüche, ferner umfassend ein Ändern einer Position von Ressourcenblöcken, RBs, und/oder Ressourcenelementen, REs, in den CCs zum Reduzieren von Interferenz aufgrund von Intermodulationsprodukten am EWS als Reaktion auf das Bestimmen (102), dass die Intermodulationsprodukte, die durch die UE aufgrund der Übertragung der mindestens zwei UL-CCs unter Verwendung der ersten UL-Übertragungskonfiguration erzeugt werden, Interferenz beim EWS verursacht.

7. Benutzereinrichtungseinheit, UE, (2700), umfassend:

einen Sender-Empfänger (2710), einschließlich eines Senders und eines Empfängers, die konfiguriert sind, um drahtlose Kommunikationen zu übertragen und zu empfangen; und
einen Prozessor (2702), der mit dem Sender-Empfänger gekoppelt ist, wobei der Prozessor konfiguriert ist, um Operationen nach einem der Ansprüche 1 bis 6 durchzuführen, und wobei der Prozessor ferner konfiguriert ist, um drahtlose Kommunikationen durch den Empfänger des Sender-Empfängers zu empfangen und um drahtlose Kommunikationen durch den Sender des Sender-Empfängers zu übertragen.

8. Verfahren zum Betreiben eines Netzknotens (2800), umfassend:

Bestimmen (302), dass eine UE (2700), die durch den Netzknoten bedient wird, ein externes drahtloses System, EWS, betreibt;
Bestimmen (304), dass Intermodulationsprodukte, die durch die UE aufgrund der Übertragung von mindestens zwei Uplink-Komponententrägern, UL-CCs, unter Verwendung einer ersten UL-Übertragungskonfiguration erzeugt werden, Interferenz bei einem EWS verursachen können;
Erzeugen (306) einer zweiten UL-Übertragungskonfiguration, die mindestens einen Übertragungsparameter mit einem niedrigeren Wert als ein entsprechender Übertragungsparameter in der ersten UL-Übertragungskonfiguration enthält, wobei der mindestens eine Parameter mindestens eines umfasst von: einer Anzahl von physischen UL-Kanälen oder physischen Signalen, einer UL-Bitrate, einer Modulationsreihenfolge und/oder einem Modulations- und Codierschema, MCS, wobei der Netzknoten Informationen über die Zeitdauer empfängt, die die zweite UL-Übertragungskonfiguration durch die UE verwendet werden wird; und
Übertragen (308) der zweiten UL-Übertragungskonfiguration an die UE.

9. Verfahren nach Anspruch 8, ferner umfassend ein Zuordnen reduzierter UL-Übertragungsressourcen an die UE als Reaktion auf das Bestimmen (304), dass Intermodulationsprodukte, die durch die UE aufgrund der Übertragung von mindestens zwei UL-CCs unter Verwendung der ersten UL-Übertragungskonfiguration erzeugt werden, Interferenz beim EWS verursachen können.

10. Verfahren nach Anspruch 9, ferner umfassend ein Zuordnen, zu einer anderen UE, von Ressourcen, die infolge des Zuordnens reduzierter UL-Übertragungsressourcen freigegeben werden.

11. Verfahren nach einem der Ansprüche 8 bis 10, ferner umfassend ein Verlängern einer Messperiode für eine UL-Funknetzmessung als Reaktion auf das Bestimmen (304), dass Intermodulationsprodukte, die durch die UE aufgrund der Übertragung von mindestens zwei UL-CCs unter Verwendung der ersten UL-Übertragungskonfiguration erzeugt werden, Interferenz beim EWS verursachen können.

12. Verfahren nach einem der Ansprüche 8 bis 10, wobei das Erzeugen der zweiten UL-Übertragungskonfiguration ein Erzeugen der zweiten UL-Übertragungskonfiguration als Reaktion auf das Bestimmen, dass die Intermodulationsprodukte Interferenz beim EWS verursachen können, umfasst.

13. Netzknoten (2800), umfassend ein Mittel, das angepasst ist, um die Schritte eines Verfahrens nach einem der Ansprüche 8 bis 10 durchzuführen.

**EP 3 219 039 B1**

**Revendications**

1. Procédé d'exploitation d'une unité d'équipement utilisateur, UE (2700), comprenant :

   le fait de déterminer (102) que des produits d'intermodulation générés par l'UE en raison de la transmission d'au moins deux porteuses composantes, CC, de liaison montante, UL, en utilisant une première configuration de transmission UL causent des interférences à un système sans fil externe, EWS ;
   l'obtention (104) d'une deuxième configuration de transmission UL qui contient au moins un paramètre de transmission avec une valeur plus basse qu'un paramètre de transmission correspondant dans la première configuration de transmission UL, dans lequel l'au moins un paramètre comprend au moins l'un parmi : un nombre de canaux physiques ou signaux physiques UL, un débit binaire UL, un ordre de modulation, et/ou un schéma de modulation et de codage, MCS ;
   la transmission (106) d'au moins l'une des CC UL en utilisant la deuxième configuration de transmission UL ; et
   le fait d'informer un nœud de réseau (2800) de la durée pendant laquelle la deuxième configuration de transmission UL sera utilisée.

2. Procédé selon la revendication 1, dans lequel l'EWS est exploité par l'UE.

3. Procédé selon l'une quelconque des revendications 1 ou 2, comprenant en outre l'estimation (110) des produits d'intermodulation générés par la transmission des deux CC UL.

4. Procédé selon l'une quelconque revendication précédente, comprenant en outre :
   le changement d'une fréquence de fonctionnement de l'EWS en réponse à la détermination (102) que les produits d'intermodulation générés par l'UE en raison de la transmission des au moins deux CC UL en utilisant la première configuration de transmission UL causent des interférence à l'EWS.

5. Procédé selon l'une quelconque revendication précédente, comprenant en outre le fait d'informer (120) un nœud de réseau de l'utilisation de la deuxième configuration de transmission UL.

6. Procédé selon l'une quelconque revendication précédente, comprenant en outre le changement d'une position de blocs de ressource, RB, et/ou d'éléments de ressource, RE, dans les CC pour réduire les interférences dues aux produits d'intermodulation au niveau de l'EWS en réponse à la détermination (102) que les produits d'intermodulation générés par l'UE en raison de la transmission des au moins deux CC UL en utilisant la première configuration de transmission UL causent des interférences à l'EWS.

7. Unité d'équipement utilisateur, UE (2700), comprenant :

   un émetteur-récepteur (2710) incluant un émetteur et un récepteur configurés pour transmettre et recevoir des communications sans fil; et
   un processeur (2702) couplé à l'émetteur-récepteur, dans lequel le processeur est configuré pour mettre en œuvre des opérations selon l'une quelconque des revendications 1 à 6, et dans lequel le processeur est en outre configuré pour recevoir des communications sans fil par l'intermédiaire du récepteur de l'émetteur-récepteur et pour transmettre des communications sans fil par l'intermédiaire de l'émetteur de l'émetteur-récepteur.

8. Procédé d'exploitation d'un nœud de réseau (2800), comprenant :

   le fait de déterminer (302) qu'un UE (2700) desservi par le nœud de réseau exploite un système sans fil externe, EWS ;
   le fait de déterminer (304) que des produits d'intermodulation générés par l'UE en raison de la transmission d'au moins deux porteuses composantes, CC, de liaison montante, UL, en utilisant une première configuration de transmission UL peuvent causer des interférences à l'EWS ;
   la génération (306) d'une deuxième configuration de transmission UL qui contient au moins un paramètre de transmission avec une valeur plus basse qu'un paramètre de transmission correspondant dans la première configuration de transmission UL, dans lequel l'au moins un paramètre comprend au moins l'un parmi : un nombre de canaux physiques ou signaux physiques UL, un débit binaire UL, un ordre de modulation, et/ou un schéma de modulation et de codage, MCS, dans lequel le nœud de réseau reçoit des informations de la durée pendant laquelle la deuxième configuration de transmission UL sera utilisée par l'UE; et
   la transmission (308) de la deuxième configuration de transmission UL à l'UE.

**9.** Procédé selon la revendication 8, comprenant en outre l'allocation de ressources réduites de transmission UL à l'UE en réponse à la détermination (304) que les produits d'intermodulation générés par l'UE en raison de la transmission d'au moins deux CC UL en utilisant la première configuration de transmission UL peuvent causer des interférences à l'EWS.

**10.** Procédé selon la revendication 9, comprenant en outre l'allocation à un autre UE de ressources libérées en conséquence de l'allocation de ressources réduites de transmission UL.

**11.** Procédé selon l'une quelconque des revendications 8 à 10, comprenant en outre l'extension d'une période de mesure pour une mesure de réseau radio UL en réponse à la détermination (304) que des produits d'intermodulation générés par l'UE en raison de la transmission d'au moins deux CC UL en utilisant la première configuration de transmission UL peuvent causer des interférences à l'EWS.

**12.** Procédé selon l'une quelconque des revendications 8 à 10, dans lequel la génération de la deuxième configuration de transmission UL comprend la génération de la deuxième configuration de transmission UL en réponse à la détermination que les produits d'intermodulation peuvent causer des interférences à l'EWS.

**13.** Nœud de réseau (2800) comprenant un moyen conçu pour mettre en œuvre les étapes d'un procédé selon l'une quelconque des revendications 8 à 10.

eNB

UE

10

20

Rel-8 Behavior

**FIGURE 1A**

20a

20b

1 UL & 2 DL CCs inter-band

**FIGURE 1B**

10

20a

20b

20c

1 UL & 3 DL CCs inter-band

**FIGURE 1C**

10a

10b

20a

20b

2 UL & 2 DL CCs intra-band

**FIGURE 1D**

eNB

F1

F2

F1

eNB

RRH

F2

**FIGURE 2**

## FIGURE 3

| Band 40:<br>2300-2400 MHz<br>TDD Mode | ISM Band: 2400-2483.5 MHzz<br>Wifi Channels 1-14, 2401 MHZ -<br>2495 MHz<br><br>Bluetooth Channels<br>2402 MHz - 2480 MHz | | Band 7 UL:<br>2500-2570 MHz<br>FDD Mode | Band 38:<br>2570-2620 MHz<br>TDD Mode | Band 7 DL:<br>2620-2690 MHz<br>FDD Mode |
|---|---|---|---|---|---|

3GPP frequency bands around ISM band

## FIGURE 4

Determining that IMD products generated by a UE due to the transmission of at least two UL CCs using a first UL transmission configuration are causing interference to an EWS

102

Obtaining a second UL transmission configuration that contains at least one parameter with a lower value than the value of the same parameter in the first UL transmission configuration

104

Transmitting at least one of the UL CCs using the second UL transmission configuration

106

*FIGURE 5*

Estimating the IMD products generated by the UE
due to the transmission of at least two UL CCs
using the first UL transmission configuration

110

Determining that IMD products generated by a UE
due to the transmission of at least two UL CCs
using a first UL transmission configuration are
causing interference to an EWS

102

Obtaining a second UL transmission configuration
that contains at least one parameter with a lower
value than the value of the same parameter in the
first UL transmission configuration

104

Transmitting at least one of the UL CCs using the
second UL transmission configuration

106

Informing a network node of the use of the second
UL transmission configuration and the length of
time the second UL transmission configuration will
be used

120

**FIGURE 6**

FIGURE 7

Determining that a UE served by the network node operates an external wireless system (EWS)
302

Determining that IMD generated by the UE due to the transmission of at least two UL CCs using a first UL transmission configuration may cause interference to the EWS
304

Generating a second UL transmission configuration that contains at least one parameter with a lower value than the value of the same parameter in the first UL transmission configuration
306

Transmitting the second UL transmission configuration to the UE
308

FIGURE 8

**FIGURE 9**

**FIGURE 10**

**FIGURE 11**

**FIGURE 12**

Transceiver
2710

WLAN
2740

GNSS
2750

Display
2730

Processor
2702

Memory
2720

Program
Code 2722

User Input
Interface
2732

Speaker
2734

User Equipment Node (UE) 2700

## FIGURE 13

Transceiver
2810

Network
Interface
2828

Processor
2802

Memory
2820

Program
Code 2822

Display
2830

User Input
Interface
2832

Speaker
2834

Radio Access Network Node 2800

## FIGURE 14

IMD Determining Module  2702

Configuration Module  2704

Receiving Module  2706

Sending Module  2708

User Equipment Node (UE) 2700

**FIGURE 15**

IMD Determining Module  2802

Configuration Module  2804

Receiving Module  2806

Sending Module  2808

Radio Access Network Node 2800

**FIGURE 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013250871 A